# EUROPÄISCHE PATENTANMELDUNG

(11) **EP 4 057 024 A1**
(43) Veröffentlichungstag der Anmeldung: **14.09.2022**
(21) Anmeldenummer: 21162204.8
(22) Anmeldetag: 12.03.2021
(51) Int. Cl.: G01S 7/481, G01S 17/48

(54) **BIAXIALER OPTISCHER SENSOR**

(71) Anmelder: Leuze electronic GmbH + Co. KG, 73277 Owen/Teck (DE)
(72) Erfinder: Feller, Bernhard, 86316 Friedberg (DE); Wendel, Dr. Simon, 73230 Kirchheim unter Teck (DE)
(74) Vertreter: Ruckh, Rainer Gerhard

(57) **Zusammenfassung**

Die Erfindung betrifft einen biaxialen optischen Sensor (1) zur Detektion von Objekten (2) in einem Überwachungsbereich (3), mit einem Sendelichtstrahlen (4) emittierenden Sender (6), welchem eine Sendeoptik (5) zugeordnet ist und mit einem Empfangslichtstrahlen (7) empfangenden Empfänger (8), welchem eine Empfangsoptik (12) zugeordnet ist, wobei an einem Objekt (2) reflektierte Sendelichtstrahlen als Empfangslichtstrahlen zum Empfänger geführt sind und mit einer Steuer- und/oder Auswerteeinrichtung (9) in welche in Abhängigkeit von Empfangssignalen des Empfängers ein Objektfeststellungssignal generiert wird zur Bestimmung eines Abstandswertes zwischen dem Sender (6) und dem Objekt (2). Der Sendeoptik (5) ist eine Einrichtung (10) zur Auskoppelung eines Teils (11) der Sendelichtstrahlen (4) in Strahlrichtung der Sendelichtstrahlen (4) zugeordnet, so dass ein Objekt (2) in einem Nahbereich des Sensors (1) vor der Empfangsoptik (12) von dem ausgekoppelten Teil (11) der Sendelichtstrahlen (4) erfasst wird.

## Beschreibung

Die Erfindung betrifft einen biaxialen optischen Sensor gemäß dem Oberbegriff des Anspruchs 1.

Solche biaxialen, optischen Sensoren können zur Überwachung eines Flächen- oder Raumbereiches dienen, aber auch zur Abstandbestimmung zwischen einem zu detektierenden Objekt und dem Empfänger. Ein in dem Überwachungsbereich befindliches Objekt remittiert das Licht des Senders. Die Sendelichtstrahlen werden als Empfangslichtstrahlen vom Objekt reflektiert und über einer Empfangsoptik, die eine oder mehrere Linsen und/oder Spiegel enthalten kann, auf den Empfänger gelenkt, wo ein elektrisches Empfangssignal erzeugt wird.

Bei einem biaxialen, optischen Sensor sind die Sendeoptik und die Empfangsoptik in einem Abstand angeordnet, zum Beispiel nebeneinander oder übereinander und definieren dadurch getrennte optische Achsen.

Die durch die Empfangsoptik auf den Empfänger gerichteten, von dem Objekt remittierten Empfangslichtstrahlen treffen in einer Position und aus einer Richtung auf die Empfangsoptik, die mit der Entfernung des Objekts von der Empfangsoptik oder dem Empfänger direkt korreliert ist. So besteht zwischen dem durch die Empfängerstrahlen erzeugten Lichtfleck, bzw. dessen Ort auf der Empfangsoptik und der Entfernung des remittierenden Objekts ein eindeutiger Zusammenhang.

Im Allgemeinen handelt es sich bei den Sendelichtstrahlen und Empfangslichtstrahlen um Licht aus Lasern oder Leuchtdioden (LEDs).

Es kann nun der Fall eintreten, dass ein Abschattungsobjekt sich vor der Empfangsoptik befindet, das so positioniert ist, dass es von den Sendelichtstrahlen des Senders nicht getroffen werden kann, aber die von einem anderen, von dem Sensor und dessen Sendelichtstrahlen getroffenen Objekt remittierten Empfangslichtstrahlen auf ihrem Weg zur Empfangsoptik teilweise oder ganz blockiert sind. Dadurch ist die Funktion des Sensors beeinträchtigt oder ganz verhindert. Um diesen Nachteil bei biaxialen, optischen Sensoren zu vermeiden bzw. die Wahrscheinlichkeit des Eintretens dieses Falles zu minimieren, ist es bekannt, den Abstand der optischen Achse von Sende- und Empfangsoptik zu minimieren.

Bei rotierenden Laserscannern, wie beispielsweise in der DE 197 57 849 B4 beschrieben ist, kann der Effekt dadurch umgangen werden, dass die optische Achse der Sendoptik und Empfangsoptik nebeneinanderliegen und so der Bereich möglicher Abschattungsobjekte für eine Rotationsposition dann von einer anderen Rotationsposition erfasst wird.

Zudem ist bekannt, Nahbereichselemente in der Art von Linsen oder Prismen zu verwenden, die der Empfangsoptik vorgelagert sind, um den Bereich unmittelbar vor dem Sender zu überwachen.

Eine weitere Maßnahme ist der Hinweis im Bedienerhandbuch des biaxialen, optischen Sensors, dass vor der Inbetriebnahme des Sensors auf mögliche Abschattungsobjekte vor dem Sensor zu achten ist.

Die Minimierung des Basisabstandes der optischen Achsen der Sendeoptik und Empfangsoptik des biaxialen optischen Sensors bringt Einschränkungen und Nachteile in Größe, Anordnung und anderen technischen Eigenschaften, wie das Übersprechen des Sensors mit sich. Ähnliches gilt für die Einschränkungen bei auf nebeneinanderliegenden Achsen rotierenden Laserscannern.

Eine Anweisung im Bedienerhandbuch führt zu erhöhtem Aufwand für den Anwender.

Durch die erwähnten Nahbereichselemente der Empfangsoptik ist es für einen Sensor möglich, remittiertes Licht von Objekten sehr nah vor dem Sensor zu erfassen, allerdings auch dann nur, wenn diese Objekte von den Sendelichtstrahlen getroffen werden. Es bleibt jedoch ein unabgedeckter Bereich vor der Empfangsoptik bestehen.

Ausgehend von diesem Stand der Technik liegt der Erfindung die Aufgabe zugrunde, einen biaxialen, optischen Sensor zu schaffen, dessen Betrieb ohne Einfluss durch Abschattungsobjekte im Nahbereich des Sensors einwandfrei erfolgen kann.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen biaxialen optischen Sensor zur Detektion von Objekten in einem Überwachungsbereich, mit einem Sendelichtstrahlen emittierenden Sender, welchem eine Sendeoptik zugeordnet ist und mit einem Empfangslichtstrahlen empfangenden Empfänger, welchem eine Empfangsoptik zugeordnet ist, wobei an einem Objekt reflektierte Sendelichtstrahlen als Empfangslichtstrahlen zum Empfänger geführt sind und mit einer Steuer- und/oder Auswerteeinrichtung in welche in Abhängigkeit von Empfangssignalen des Empfängers ein Objektfeststellungssignal generiert wird zur Bestimmung eines Abstandswertes zwischen dem Sender und dem Objekt. Der Sendeoptik ist eine Einrichtung zur Auskoppelung eines Teils der Sendelichtstrahlen in Strahlrichtung der Sendelichtstrahlen zugeordnet, so dass ein Objekt in einem Nahbereich des Sensors vor der Empfangsoptik von dem ausgekoppelten Teil der Sendelichtstrahlen erfasst wird.

Insbesondere kann der biaxiale optische Sensor ein Distanzsensor sein. In diesem Fall wird ein Abstand eines Objekts zum Sensor bestimmt und der ermittelte Distanzwert wird als Objektfeststellungssignal angegeben.

Dadurch dass der Sendeoptik eine Einrichtung zur Auskopplung eines Teils der Sendelichtstrahlen in Strahlrichtung der Sendestrahlen nachgelagert ist, so dass zumindest ein Objekt, das sich im Nahbereich des Sensors von dem ausgekoppelten Teil der Sendelichtstrahlen vom Empfänger detektierbar ist, ist eine technische Maßnahme angegeben, ein solches Abschattungsobjekt im Nahbereich vor der Empfangsoptik erfassen zu können.

Das Abschattungsobjekt vor der Empfangsoptik wird also von dem gezielt ausgekoppelten Sendelicht beleuchtet und kann über die Empfangsoptik detektiert werden. Dadurch ist es möglich, beispielsweise eine Warnung an den Benutzer zu oder eine anderweitige Fehlermeldung auszugeben, die auf das Vorhandensein des Abschattungsobjekts hinweist. Es sind auch Korrektur-Algorithmen oder andere Maßnahmen denkbar, die mögliche Fehler der Messung durch das Abschattungsobjekt kompensieren.

Anforderungen an die Benutzung des Sensors, wie das Vermeiden von kurzen Abständen von Sende- und Empfangsachse, werden dadurch obsolet. Anweisungen im Benutzerhandbuch sind hinfällig.

In einem besonders bevorzugten Ausführungsbeispiel der Erfindung ist die Sendoptik der Sendlichtstrahlen mit zumindest einer Kollimationslinse gebildet, in deren Strahlengang des Sendelichtstrahls ein optisches Element zur Auskoppelung eines Teils der Sendelichtstrahlen nachgelagert ist.

Dadurch kann die Steuer- und/oder Auswerteinrichtung mehrere Abstände zu zumindest zwei Objekten bestimmen.

Um eine besonders kostengünstige Bauweise für den Sensor zu wählen, kann die Sendoptik und/oder die Einrichtung zur Auskopplung eines Teils der Sendelichtstrahlen durch eine Kollimationslinse in der Art einer Replica - Linse gebildet sein.

Eine solche Replica-Optik ist grundsätzlich in ihrer Bauform bekannt und besteht aus einer Glaslinse als Tragkörper, die in ein dünnwandiges Bett aus lichtdurchlässigem Kunststoff, sozusagen als Sandwichbauteil in einer Form hergestellt wird. An solchen Replica-Linsen lassen sich kostengünstig und reproduzierbar asphärische Flächen und Flächen verschiedener Krümmungsradien ausformen. So kann einstückig die Sendeoptik mit der Einrichtung zur Auskoppelung eines Teils der Sendelichtstrahlen gebildet sein.

Es kann auch vorteilhaft sein, die Einrichtung zur Auskopplung der Sendelichtstrahlen an der Kollimationslinse an einem radialen und axialen Randbereich dieser anzuordnen, sodass ein ausgekoppelter Sendelichtstrahl mit einem Winkel zu dem Haupt-Sendelichtstrahl abgeht.

Es kann auch vorteilhaft sein, die Einrichtung zur Auskopplung der Sendelichtstrahlen in der Art eines diffraktiven optischen Elements oder Gitters zu bilden. Entsprechende diffraktive Optiken sind als solche bekannt und können nach Bedarf verwendet werden um beispielsweise eine optische Linse im Strahlengang zu ersetzen. Sie kann in der Art geätzter Strukturen (streifenförmige Erhebungen oder Einsenkungen) oder durch Laserätzen oder Gravieren- gebildet werden. Das Ätzen der diffraktiven Optik kann Teil eines photolithographischen Verfahrens sein.

Durch die diffraktive Optik kann ein linienförmiger oder streifenförmiger Lichtstrahl gebildet sein, dessen seitliche Ausdehnungen vorgebbar sind. Es lassen sich dadurch auch neben Strahlen auch Gitter bilden. Die Einrichtung zur Auskopplung eines Teils der Sendelichtstrahlen kann auch in der Art eines Laserkollimators gebildet sein.

Auch eine lichtdurchlässige Scheibe mit entsprechend gestalteten Brechungsflächen kann dazu dienen, einen Teil der Sendelichtstrahlen auszukoppeln. Die Einrichtung kann dabei in die Scheibe integriert oder auf die Scheibe aufgesetzt sein.

Die Scheibe kann auch zum Zwecke der Abdeckung des Sensors und seiner Optiken dienen.

Anstatt der Scheibe kann auch ein Spiegel zur Strahlaufteilung des Sendelichtstrahles genutzt werden, der in mindestens zwei Bereiche aufgeteilt ist, von denen mindesten einer den ausgekoppelten Teil der Sendelichtstrahlen in den Nahbereich vor die Empfangsoptik lenkt.

Es kann auch eine sphärisch gewölbte, lichtdurchlässige Kuppel als Einrichtung zur Auskopplung eines Teils der Sendelichtstrahlen dienen, wobei die Kuppel vorzugsweise zumindest die Sendeoptik des biaxialen optischen Sensors überspannt. Auf der Aussen- oder Innenseite der Kuppel lassen sich beispielsweise diffraktive optische Elemente aufsetzen oder mit der Kuppel beispielsweise durch Laserätzen herstellen, die dann die Einrichtung zur Auskopplung eines Teils der Sendelichtstrahlen bilden.

Es lassen sich auch optische, im Sinne der Auskopplung eines Teils der Sendelichtstrahlen, aktive Flächen an oder in der Kuppel anordnen.

Die Kuppel dient somit als Schutz des Sensors und optischen Elements zur Definition der Strahlengänge.

Es hat sich gezeigt, dass die notwendige optische Leistung des ausgekoppelten Teils der Sendelichtstrahlen zur Darstellung der Nahbereichsüberwachung des Sensors nur sehr gering sein muss. So genügen etwa 1 bis 5%, vorzugsweise 2% der gesamten optischen Leistung des Sendelichtstrahls.

Wie bereits bei einigen Ausführungsbeispielen erwähnt, kann die Einrichtung zur Auskopplung eines Teils der Sendlichtstrahlen eine von der Sendeoptik separate Einheit sein. Eine besonders einfache technische Lösung stellt hierbei die Ausführung der Einrichtung in der Art einer planen, lichtdurchlässigen Platte mit entsprechenden optisch aktiven Flächen dar.

Die Erfindung wird im Nachstehenden anhand der Zeichnungen erläutert. Es zeigen:
- Fig. 1: eine schematische Seitenansicht eines biaxialen, optischen Sensors mit einem Abschattungsobjekt, das die von einem zu detektierenden Objekt remittierte Empfängerlichtstrahlen abschattet, gemäß des Standes der Technik,
- Fig. 2: eine schematische Draufsicht auf einen biaxialen, optischen Sensor gemäß der Erfindung,
- Fig. 3: eine schematische perspektivische Ansicht einer Sendeoptik des Sensors in Fig. 2
- Fig. 4a: eine schematische Darstellung des Strahlenganges von Sendelichtstrahlen eines Sensors gemäß der Erfindung,
- Fig. 4b: eine teilweise, perspektivische Ansicht eines Strahlenganges von Sendelichtstrahlen durch die Sendeoptik in Fig. 3; und
- Fig. 5: einen Strahlenverlauf von Sendelichtstrahlen auf ein Objekt, mit deren ausgekoppeltem Teil der Sendelichtstrahlen.

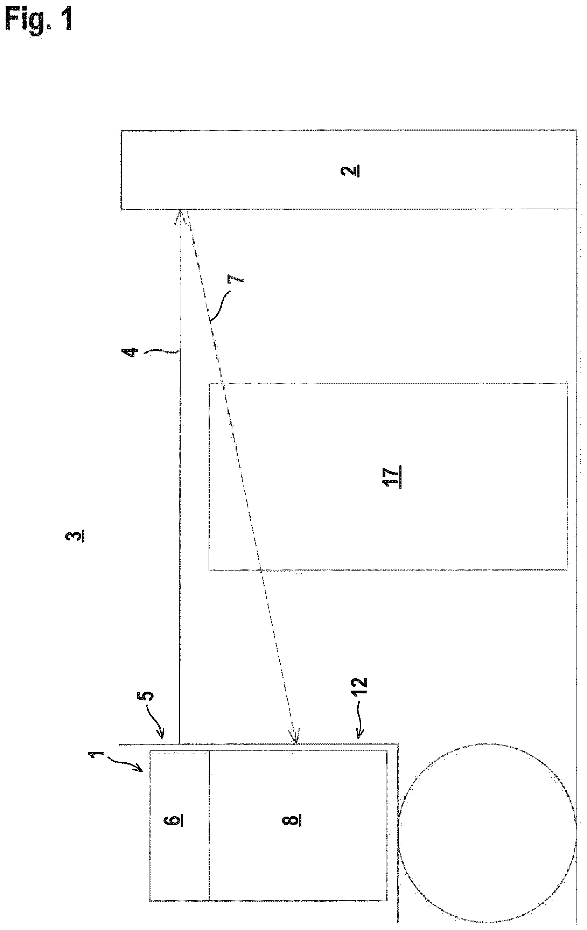

In Fig. 1 ist in einer schematischen Seitenansicht ein biaxialer, optischer Sensor 1 zur Entfernungsmessung eines Abstandes eines Objekts 2 von einem Empfänger 8 gemäß des Standes der Technik gezeigt. Licht oder Sendlichtstrahlen 4 werden von einem beispielsweise als Laserdiode gebildeten Sender 6 durch eine Sendeoptik 5 in der Art einer Kollimatorlinse emittiert und durchstreichen einen Überwachungsbereich 3 bis sie auf ein Objekt 2 treffen. Ein Empfänger 8, der beispielsweise in der Art eines Triangulationstasters, mehrerer Fotodioden als PSD oder als APD für eine Pulslaufzeit - oder Phasenmessung gebildet sein kann, mit einer zu der optischen Achse 15 des Senders 6 beabstandeten optischen Achse 16, empfängt die gestrichelt dargestellten, von dem Objekt 2 remittierten Empfangslichtstrahlen 7.

Der Empfänger weist eine Vielzahl von lichtsensitiven Elementen auf, die nicht näher dargestellt sind und beispielsweise durch eine Mehrfachanordnung an Photodioden oder APDs oder durch eine CCD- oder DMOS-Technik ausgeführt sein können. Es kann auch zweckmäßig sein, den Empfänger 8 durch SPAD-Arrays zu bilden. SPAD-Array sind hochempfindlich, hochintegrierbar und bieten die Möglichkeit durch ein Absenken der Vorspannung unter eine Durchbruchsspannung inaktiv werden zu können. Dadurch können nur solche SPADs aktiv geschaltet werden, die den gewünschten Messpunkten und damit den erwarteten Auftrefforten der remittierten Empfangslichtstrahlen 7 entsprechen.

Eine Steuer- und/oder Auswerteeinrichtung 9 ist mit dem Sender 6 und Empfänger 8 verbunden. Die Empfangslichtsignale können dabei ausgenutzt werden um eine Laufzeit des Lichts zu den Messpunkten oder der detektierten Objekte 2 in dem Überwachungsbereich 3 und daraus den Abstand zum Sender 6 oder Empfänger 8 zu bestimmen.

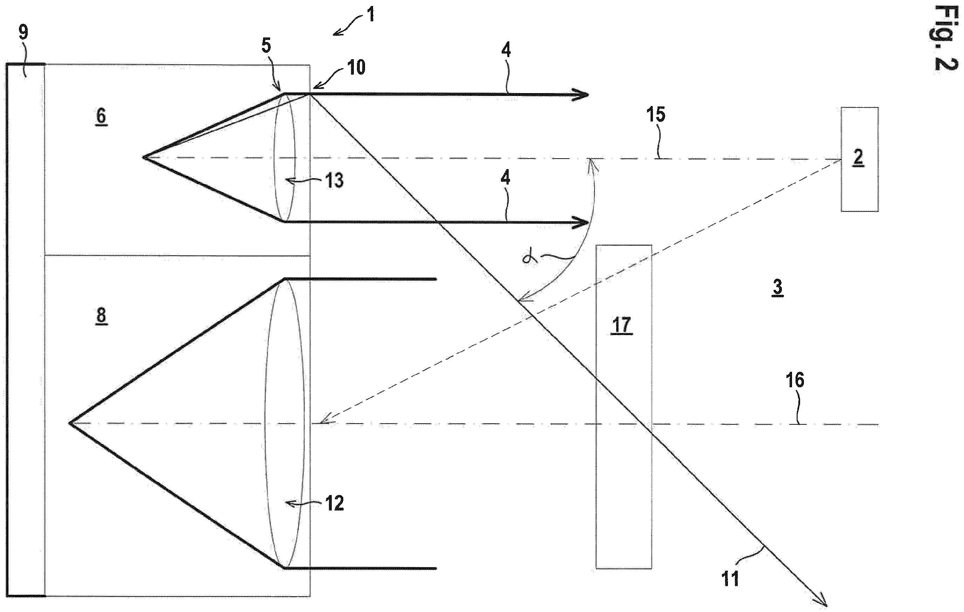

Ein Abschattungsobjekt 17 befindet sich in dem in Fig. 1 dargestellten Ausführungsbeispiel vor dem Empfänger, sodass es von dem remittierenden und Empfangslichtstrahlen 7 erzeugenden Objekt 2 nicht getroffen wird. Das von dem zu detektierenden Objekt reflektierte Licht wird auf seinem Weg zu einer nicht näher in Fig. 1 dargestellten Empfangsoptik 12 (siehe Fig. 2), teilweise oder ganz blockiert und damit die Funktion des Sensors 1 beeinträchtigt oder blockiert. Um diesen Nachteil zu überkommen, weist, wie die Figuren 2, 3 und 4 zeigen, die Sendoptik 5 eine Einrichtung 10 zur Auskopplung eines Teils 11 der Sendelichtstrahlen 4 auf.

Wie in Fig. 2 gezeigt, weist dieser Teil 11 der Sendelichtstrahlen 4 einen Winkel α zu der optischen Achse 15 auf.

Diese ausgekoppelten Sendelichtstrahlen 11 werden in den Nahbereich des Sensors 1 vor die Empfangsoptik 12 gerichtet und können ein dort vorhandenes Abschattungsobjekt 17 beleuchten, sodass das vom Abschattungsobjekt 17 remittierte Licht von der Empfangsoptik 12 des Sensors 1 detektiert werden.

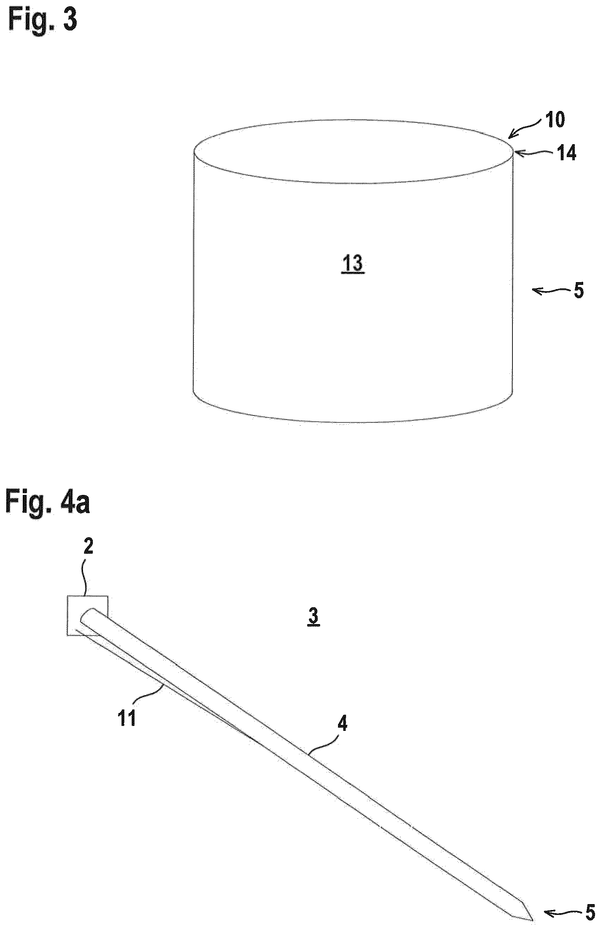

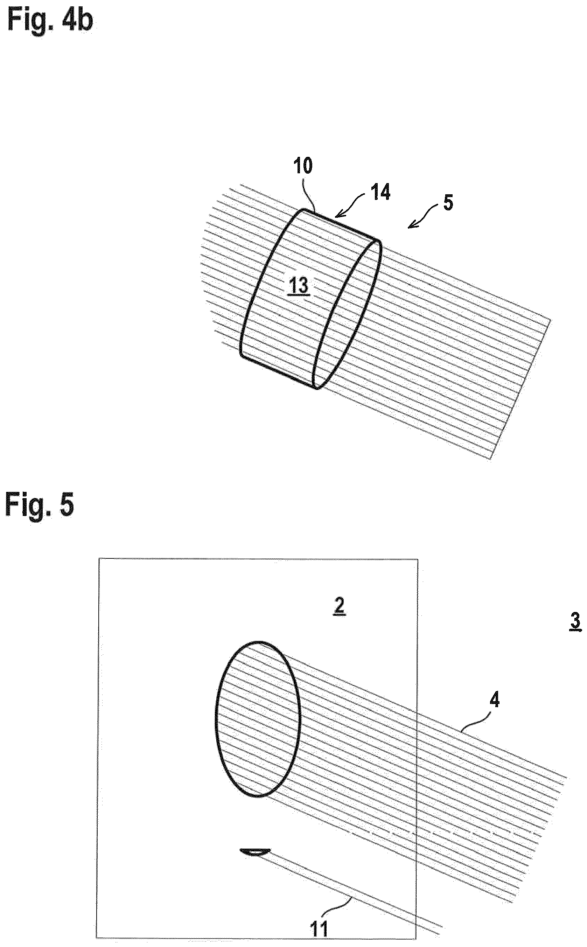

Wie die Fig. 2 lediglich schematisch, die Figuren 3 und 4b in einem Ausführungsbeispiel zeigen, weist die Sendeoptik 5 eine Kollimationslinse 13 in zylindrischer Bauart auf, die in Strahlrichtung der Sendelichtstrahlen 4, dem Sender 6 abgewandt, an einem radialen und axialen Randbereich 14 die Einrichtung 10 zur Auskopplung eines Teils 11 der Sendlichtstrahlen 4 aus dem Haupt-Sendelichtstrahl 4 mit dem besagten Winkel α bewirken kann.

In einem kostengünstig herstellbaren Ausführungsbeispiel ist die Kollimationslinse 13 als Replica-Linse ausgeführt und die Einrichtung 10 kann an der Replica-Linse beispielsweise durch die zur Herstellung der Replica-Linse benötigte Form definiert werden.

Die Einrichtung 10 ist in den gezeigten Ausführungsbeispielen auf der dem Objekt 2 zugewandten Seite der Kollimationslinse 13 angeordnet. Die Einrichtung 10 kann durch eine optisch aktive Fläche mit einer gegenüber dem Krümmungsradius der Kollimationslinse 13 anderen Krümmung gebildet sein.

Dadurch können Abschattungsobjekte 17 wie in Fig. 1 gezeigt durch den in den Nahbereich vor der Empfangsoptik gelenkten Lichtstrahl beleuchtet und das reflektierte Licht kann über die Empfangsoptik 12 erfasst und das Abschattungsobjekt 17 detektiert werden. Der Benutzer des Sensors 1 kann über diesen Umstand informiert werden.

Wie insbesondere die Figuren 4a und 5 zeigen, ist der Anteil des ausgekoppelten Lichts von der gesamten optischen Leistung des Sendelichtstrahls 4 sehr gering und beträgt in einem typischen Ausführungsbeispiel lediglich 2%.

### Bezugszeichenliste

- (1): Sensor, optisch, biaxial
- (2): Objekt
- (3): Überwachungsbereich
- (4): Sendelichtstrahl
- (5): Sendeoptik
- (6): Sender
- (7): Empfangslichtstrahl
- (8): Empfänger
- (9): Steuer- und/oder Auswerteeinrichtung
- (10): Einrichtung
- (11): Teil, v. 4
- (12): Empfangsoptik
- (13): Kollimationslinse
- (14): Randbereich
- (15): Optischen Achse, v. 6
- (16): Optischen Achse, v. 8
- (17): Abschattungsobjekt
- (α): Winkel, zwischen 4 und 11

## Patentansprüche

1. Biaxialer optischer Sensor zur Detektion von Objekten (2) in einem Überwachungsbereich (3), mit einem Sendelichtstrahlen (4) emittierenden Sender (6), welchem eine Sendeoptik (5) zugeordnet ist, und mit einem Empfangslichtstrahlen (7) empfangenden Empfänger (8), welchem eine Empfangsoptik (12) zugeordnet ist, wobei an einem Objekt reflektierte Sendelichtstrahlen als Empfangslichtstrahlen zum Empfänger geführt sind, und mit einer Steuer- und/oder Auswerteeinrichtung (9) in welcher in Abhängigkeit von Empfangssignalen des Empfängers ein Objektfeststellungssignal generiert wird, **dadurch gekennzeichnet, dass** der Sendeoptik (5) eine Einrichtung (10) zur Auskoppelung eines Teils (11) der Sendelichtstrahlen (4) in Strahlrichtung der Sendlichtstrahlen (4) zugeordnet ist, so dass ein Objekt (2) in einem Nahbereich des Sensors (1) vor der Empfangsoptik (12) von dem ausgekoppelten Teil (11) der Sendelichtstrahlen (4) erfasst wird.

2. Biaxialer optischer Sensor nach Anspruch 1, **dadurch gekennzeichnet, dass** dieser als Distanzsensor ausgebildet ist.

3. Biaxialer optischer Sensor nach Anspruch 1 oder 2, **dadurch gekennzeichnet, dass** die Sendeoptik (5) für Sendelichtstrahlen (4) zumindest eine Kollimationslinse (13) aufweist, der in Strahlrichtung des Sendelichtstrahls (4) eine Einrichtung (10) zur Auskopplung eines Teils (11) der Sendelichtstrahlen (4) zugeordnet ist.

4. Biaxialer optischer Sensor nach Anspruch 1-3, **dadurch gekennzeichnet, dass** die Sendeoptik (5) und/oder die Einrichtung (10) durch eine Kollimationslinse (13) in der Art einer Replica-Linse gebildet ist.

5. Biaxialer optischer Sensor nach Anspruch 4, **dadurch gekennzeichnet, dass** die Einrichtung (10) zur Auskopplung eines Teils (11) der Sendelichtstrahlen (4) an einem radialen und axialen Randbereich (14) der Kollimationslinse (13) gebildet ist.

6. Biaxialer optischer Sensor nach Anspruch 1 oder 2, **dadurch gekennzeichnet, dass** die Einrichtung (10) zur Auskopplung der Sendelichtstrahlen (4) in der Art eines diffraktiven optischen Elements gebildet ist.

7. Biaxialer optische Sensor nach Anspruch 1 oder 2, **dadurch gekennzeichnet, dass** die Einrichtung (10) zur Auskopplung eines Teils (11) der Sendelichtstrahlen (4) in der Art eines Laserkollimators gebildet ist.

8. Biaxialer optischer Sensor nach einem der Ansprüche 1 oder 2, **dadurch gekennzeichnet, dass** die Einrichtung (10) zur Auskopplung eines Teils (11) der Sendelichtstrahlen (4) in eine lichtdurchlässige Scheibe integriert ist oder auf die Scheibe an einer ihrer zwei Seiten aufgesetzt ist.

9. Biaxialer optischer Sensor nach Anspruch 8, **dadurch gekennzeichnet, dass** die Scheibe als Abdeckung und Schutz für den biaxialen optischen Sensor (1) dient.

10. Biaxialer optischer Sensor nach Anspruch 1 oder 2, **dadurch gekennzeichnet dass** die Einrichtung (10) zur Auskopplung eines Teils (11) der Sendelichtstrahlen (4) in der Art einer lichtdurchlässigen Kuppel gebildet ist, die die Sendeoptik überspannt.

11. Biaxialer optischer Sensor nach einem der Ansprüche 1 oder 2, **dadurch gekennzeichnet, dass** die Einrichtung (10) zur Auskopplung eines Teils (11) der Sendelichtstrahlen (4) in einen festen oder rotierenden Umlenkspiegel integriert ist, der zumindest zwei Zonen ausbildet, und dass jede Zone einen anderen Ausfallswinkel der Sendelichtstrahlen (4) ermöglicht.

12. Biaxialer optischer Sensor nach Anspruch 11, **dadurch gekennzeichnet, dass** die Einrichtung (10) zur Auskopplung eines Teils (11) der Sendelichtstrahlen in einer rotierenden Spiegelfläche eines Drehspiegels oder in mehreren Spiegelflächen eines Polygonrads integriert ist.

13. Biaxialer optischer Sensor nach einem der Ansprüche 1 oder 2, **dadurch gekennzeichnet, dass** die Einrichtung (10) zur Auskopplung eines Teils (11) der Sendelichtstrahlen (4) durch eine Blende mit zumindest zwei Zonen gebildet ist, wobei eine Zone der Blende die Einrichtung (10) zur Auskopplung beinhaltet und die andere die Sendelichtstrahlen (4) ungebeugt hindurchlässt.

14. Biaxialer optischer Sensor nach einem der Ansprüche 1 bis 12, **dadurch gekennzeichnet, dass** die optische Leistung des Teils (11) der ausgekoppelten Sendelichtstrahlen (4) etwa 1 bis 5% der gesamten optischen Leistung des Sendelichtstrahls (4) beträgt.

15. Biaxialer optischer Sensor nach Anspruch 13, **dadurch gekennzeichnet, dass** die optische Leistung des Teils (11) der ausgekoppelten Sendelichtstrahlen (4) 2% beträgt.

16. Biaxialer optischer Sensor nach Anspruch 1 oder 2, **dadurch gekennzeichnet, dass** die Einrichtung (10) zur Auskopplung eines Teils (11) der Sendelichtstrahlen (4) eine von der Sendeoptik (5) separate Einheit ist.

17. Biaxialer optischer Sensor nach Anspruch 16, **dadurch gekennzeichnet, dass** die Einrichtung (10) zur Auskopplung eines Teils (11) der Sendelichtstrahlen (4) durch eine plane, lichtdurchlässige Platte gebildet ist.
